(19) Europäisches Patentamt
European Patent Office
Office européen des brevets

(11) EP 2 899 162 A1

# (12) EUROPÄISCHE PATENTANMELDUNG

(43) Veröffentlichungstag:
**29.07.2015 Patentblatt 2015/31**

(21) Anmeldenummer: **14152184.9**

(22) Anmeldetag: **22.01.2014**

(51) Int Cl.:
***C01F 11/46*** *(2006.01)* ***C01F 1/00*** *(2006.01)*
***C04B 28/14*** *(2006.01)* ***C04B 28/16*** *(2006.01)*
***C04B 22/14*** *(2006.01)* ***C04B 40/00*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF SE**
**67056 Ludwigshafen (DE)**

(72) Erfinder:
- **Siebert, Max**
  **67063 Ludwigshafen (DE)**
- **Kempter, Andreas**
  **67433 Neustadt (DE)**
- **Hesse, Christoph**
  **85560 Ebersberg (DE)**
- **Loges, Niklas**
  **83308 Trostberg (DE)**
- **Schmitt, Rebecca**
  **67061 Ludwigshafen (DE)**

(74) Vertreter: **Lorenz, Klaus Uwe et al**
**BASF Construction Solutions GmbH**
**Abteilung GVX/DT**
**Dr.-Albert-Frank-Straße 32**
**83308 Trostberg (DE)**

## (54) Synthese und Anwendung von auf CaSO4 basierten Erhärtungsbeschleunigern

(57) Die Erfindung betrifft ein Verfahren zur Herstellung von pulverförmigen Erhärtungsbeschleunigern durch reaktive Sprühtrocknung, wobei eine wässrige Calciumionen enthaltende Phase I und eine wässrige Sulfationen enthaltende Phase II, wobei das Molverhältnis der Calciumionen zu den Sulfationen von 1/5 bis 5/1 beträgt, an einer Sprühdüse in Kontakt gebracht wird und die miteinander an der Sprühdüse in Kontakt gebrachten Phasen I und II in einer strömenden Umgebung aus Trocknungsgas versprüht werden. Ebenfalls betroffen sind die pulverförmigen Erhärtungsbeschleuniger herstellbar gemäß dem erfindungsgemäßen Verfahren und deren Verwendung zur Beschleunigung des Erhärtens von Bassanit und/oder Anhydrit unter Entstehung von Gips.

EP 2 899 162 A1

Printed by Jouve, 75001 PARIS (FR)

## Beschreibung

Die vorliegende Erfindung betrifft ein Verfahren zur Herstellung von auf $CaSO_4$ basierten pulverförmigen Erhärtungsbeschleunigern durch reaktive Sprühtrocknung, wobei a) eine wässrige, flüssige Calciumionen enthaltende Phase I und eine wässrige flüssige Sulfationen enthaltende Phase II, wobei das Molverhältnis der Calciumionen in der Phase I zu den Sulfationen in der Phase II von 1/5 bis 5/1 beträgt, an einer Sprühdüse in Kontakt gebracht wird, b) die miteinander an der Sprühdüse in Kontakt gebrachten Phasen I und II in einer strömenden Umgebung aus Trocknungsgas mit einer Eingangstemperatur im Bereich von 120 bis 300 °C und einer Ausgangstemperatur im Bereich von 60 bis 120 °C versprüht werden, wobei die Calciumionen mit den Sulfationen reagieren und unter Wasserentzug durch das Trocknungsgas der pulverförmige Erhärtungsbeschleuniger erhalten wird. Ebenfalls betroffen sind pulverförmige Erhärtungsbeschleuniger herstellbar gemäß dem erfindungsgemäßen Verfahren und die Verwendung der pulverförmigen Erhärtungsbeschleuniger zur Beschleunigung des Erhärtens von Bassanit und/oder Anhydrit unter Entstehung von Gips.

Der Begriff Gips wird im allgemeinen Sprachgebrauch sowohl für die Verbindung Calciumsulfat-Dihydrat ($CaSO_4 \cdot 2\ H_2O$) als auch für das aus dieser Verbindung bestehende Gestein und den entsprechenden Baustoff, Calciumsulfat-Halbhydrat ($CaSO_4 \cdot 0{,}5\ H_2O$ oder Bassanit) oder Anhydrit ($CaSO_4$), verwendet. Gips ($CaSO_4 \cdot 2\ H_2O$) kommt in der Natur in großen Lagerstätten vor, die beim Austrocknen von Meeren in der Erdgeschichte entstanden sind. Weiterhin wird Gips ($CaSO_4 \cdot 2\ H_2O$) als Produkt oder Nebenprodukt bei verschiedenen Prozessen in der Industrie gewonnen, beispielsweise der Rauchgas-Entschwefelung, bei der Schwefeldioxid aus den Verbrennungsabgasen der Kohlekraftwerke mittels einer Calciumcarbonat- oder Calciumhydroxid-Aufschlämmung abgereichert wird.

Beim Erhitzen auf Temperaturen von 120-130 °C gibt das Calciumsulfat-Dihydrat einen Teil seines Kristallwassers ab und geht in Bassanit über. Vermischt man Bassanit mit Wasser, dann bildet sich innerhalb von kurzer Zeit das Dihydrat zurück.

Bassanit (Calciumsulfat-Halbhydrat) ist ein wichtiger Baustoff zur Herstellung von Mörteln, Estrichen, Gussformen und insbesondere Gipskartonplatten. Calciumsulfat-Bindemitteln werden aus technischen Erfordernissen heraus erheblich variierende Eigenschaften abverlangt. Insbesondere hinsichtlich der Verarbeitungszeit und dem Zeitpunkt des Versteifens müssen die Bindemittel im Zeitraum von wenigen Minuten bis mehreren Stunden variabel einstellbar sein. Um diesen Anforderungen gerecht zu werden, ist der Einsatz von erhärtungsregulierenden Zusätzen notwendig.

Von maßgeblicher Bedeutung ist die Beschleunigung des Erhärtens bei der Herstellung von Gipsbauplatten, insbesondere Gipskartonplatten. Weltweit werden derzeit jährlich über 8.000 Mio. $m^2$ Gipskartonplatten hergestellt. Die Herstellung von Gipskartonplatten ist lange bekannt. Sie ist beispielsweise beschrieben in dem US Patent 4,009,062. Der eingesetzte erhärtungsfähige Gipsbrei aus Bassanit und Wasser wird typischerweise in einem Durchlaufmischer mit hoher Drehzahl erzeugt, auf eine Kartonbahn kontinuierlich aufgetragen und mit einem zweiten Karton abgedeckt. Die beiden Kartonbahnen werden als Sicht- bzw. Rückseitenkarton bezeichnet. Der Plattenstrang bewegt sich dann auf einem sogenannten Abbindeband, wobei am Ende des Abbindebandes eine fast vollständige Umwandlung der erhärtungsfähigen Calciumsulfat-Phasen in Calciumsulfat-Dihydrat stattgefunden haben muss. Nach dieser Aushärtung wird die Bahn in Platten vereinzelt und das noch in den Platten vorhandene Wasser wird in beheizten Mehretagentrocknern entfernt. Derartige Gipskartonplatten werden im Innenausbau für Decken und Wände im großen Umfang verwendet.

Um der steigenden Nachfrage gerecht zu werden, sowie zur Minimierung der Produktionskosten, werden ständig Anstrengungen unternommen, den Herstellungsprozess zu verbessern. Moderne Anlagen zur Fabrikation von Gipsbauplatten können Fertigungsgeschwindigkeiten von bis zu 180 Meter pro Minute erreichen. Die größtmögliche Auslastung der Anlagenkapazität ist nur durch den Einsatz von hochwirksamen Beschleunigern möglich. Die Erhärtungszeit des Bassanits bestimmt hierbei die Dauer, bis die Gipskartonplatten geschnitten werden können und damit die Länge bzw. die Geschwindigkeit des Förderbandes und somit die Produktionsgeschwindigkeit. Darüber hinaus muss die Hydratation abgeschlossen sein, bevor die Platten im Trockner hohen Temperaturen ausgesetzt werden. Ansonsten wird das Festigkeitspotential des Bindemittels unzureichend genutzt und die Gefahr der Volumenexpansion durch Nachhydratation bei Feuchtezutritt geschaffen.

Es besteht daher erhebliches ökonomisches Interesse, den Erhärtungsvorgang zu beschleunigen.

Als Erhärtungsbeschleuniger wird heute in der industriellen Herstellung von Gipskartonplatten aufgemahlener Gips (Calciumsulfat-Dihydrat) eingesetzt, wobei ein großer Teil der eingesetzten Partikel im Bereich von 1 $\mu m$ liegt. Für den kontinuierlichen Prozess der Gipskartonplattenproduktion ist eine ausgeprägte Stabilität der Beschleunigungswirkung des aufgemahlenen Calciumsulfat-Dihydrats von entscheidender Bedeutung. Die Herstellung eines über einen längeren Zeitraum gleichbleibend effektiven Erhärtungsbeschleunigers bereitet technisch aber weiterhin große Probleme. Die Effektivität von aufgemahlenem Calciumsulfat-Dihydrat, insbesondere in Gegenwart von Luftfeuchtigkeit, nimmt innerhalb von kurzer Zeit ab. Weiterhin kann das aufgemahlene Calciumsulfat-Dihydrat nur in Pulverform eingesetzt werden, da ein Einbringen in Wasser sofort zur Auflösung der feinsten Partikel führt, welche für die Erhärtungsbeschleunigung entscheidend sind. Aus der Dissertation von Müller (" Die Abbindebeschleunigung von Stuckgips durch Calciumsulfatdihydrat" , ISBN 978-3-899-58-328-1) ist bekannt, dass sich gefälltes Calciumsulfat Dihydrat nicht als Erhärtungsbeschleuniger eignet und dass eine gute Erhärtungsbeschleunigung nur durch Vermahlen von Calciumsulfat-Dihydrat erreicht werden kann, wobei sowohl die Menge an Feinstpartikeln im Nanometerbereich als auch die bei der Mahlung hervorgerufene Kristallgitterstörung für die Wirksamkeit eine große Rolle spielt.

Als weiterer Beschleuniger wird neben aufgemahlenem Calciumsulfat-Dihydrat zusätzlich auch noch Kaliumsulfat eingesetzt. Dies hat jedoch den Nachteil, dass es zu einer deutlichen Verringerung der Enddruckfestigkeit der hergestellten Produkte führt. Der Einsatz von Kaliumsulfat hat auch den Nachteil, dass durch die erhöhte Ionenstärke durch das eingebrachte lösliche Sulfat die Wirksamkeit von anderen Additiven wie Fließmitteln (zum Beispiel Polycarboxylatether) oder Rheologieadditiven (zum Beispiel hochmolekulare Stabilisatoren auf Sulfonsäurebasis) negativ beeinflusst werden können.

Um den Beschleunigungseffekt von aufgemahlenem Calciumsulfat-Dihydrat zu verbessern wird zur Aktivierung auch Portlandzement oder $Ca(OH)_2$ zugegeben. Dies hat allerdings den Nachteil, dass diese Zusätze über die Zeit bei der Lagerung zur Karbonatisierung neigen und damit nicht mehr so effektiv sind. Die mangelnde Lagerstabilität und Effektivität als Erhärtungsbeschleuniger ist wiederum ein Unsicherheitsfaktor in der Produktion von beispielsweise Gipskartonplatten.

Ähnliche Probleme bezüglich der Wirkung als Erhärtungsbeschleuniger wie bei der Gipskartonplattenherstellung werden bei der Anwendung von Bassanit als Bindemittel bei self levelling underlayments (SLU), bei Anhydrit basierten Fließestrichen, Gipsputzen und alpha Bassanit - Spachtelmassen beobachtet.

Aus der WO 2005/021632 ist ein Verfahren zur Herstellung feinteiliger, anorganischer Festkörper durch Fällung der feinteiligen anorganischen Festkörper aus Lösungen bekannt. Die Oberfläche der feinteiligen anorganischen Festkörper wird hierbei mit mindestens einem Dispergiermittel beschichtet. Als anorganischer Festkörper wird neben vielen anderen Verbindungen gefälltes Calciumsulfat offenbart, während als Dispergiermittel beispielsweise Acrylate- oder Methacrylatcopolymere sowie deren Salze, Polyphosphate und modifizierte Fettsäurederivate eingesetzt werden.

In der noch unpublizierten, beim Europäischen Patentamt hinterlegten Schrift mit der Anmeldenummer 12177315.4 werden auf Gips ($CaSO_4 \cdot 2\ H_2O$) basierte Erhärtungsbeschleuniger beschrieben, welche durch eine Nassfällung in Anwesenheit von säuregruppenhaltigen Polymeren erzeugt werden. Die säuregruppenhaltigen Polymere enthalten zusätzlich Polyetherseitenketten und sind allgemein unter dem Stichwort Polycarboxylatether (PCE) bekannt. Die so hergestellten Erhärtungsbeschleuniger sind besonders zur industriellen Herstellung von Gipskartonplatten geeignet.

In der ebenfalls noch unpublizierten, beim Europäischen Patentamt hinterlegten Schrift mit der Anmeldenummer 13154684.8 werden anorganisch-organische Kompositmaterialien durch reaktive Sprühtrocknung von schwerlöslichen anorganischen Salzen hergestellt. Die organische Komponente stellt dabei mindestens einen hydrophoben, meist schwerlöslichen Wirkstoff dar, welcher beispielsweise ein pharmazeutischer oder kosmetischer Wirkstoff sein kann, ein Nahrungsergänzungsmittel, Pflanzenschutzmittel oder ein Pigment. Zweck ist die Wirkstoffe in feinverteilter Form in einer amorphen Matrix einzubinden. Die schwerlöslichen anorganischen Salze werden aus gut wasserlöslichen Salzen geeigneter Kationen (z.B. Carbonate, Hydrogencarbonate, Sulfate, Phosphate, Hydrogenphosphate) und gut wasserlöslichen Lösungen geeigneter Anionen (z.B. verschiedene Calciumsalze, Magnesiumsalze und Zinksalze) gebildet. Calciumsulfat als schwerlösliches Salz ist nicht erwähnt, auch nicht etwaige Mengenverhältnisse von Calciumionen und Sulfationen.

Aufgabe der vorliegenden Erfindung war es deshalb, einen Erhärtungsbeschleuniger für Bassanit sowie Anhydrit zur Verfügung zu stellen, welcher eine sehr gute Erhärtungsbeschleunigung aufweist. Insbesondere soll auch bei der Gipskartonplattenherstellung eine stabile Prozessführung ermöglicht werden. Das Verfahren zur Herstellung der erhärtungsbeschleunigenden Produkte sollte möglichst einfach und kostengünstig sein und möglichst in einem Schritt zu den pulverförmigen Produkten führen.

Gelöst wurde diese Aufgabe durch ein Verfahren zur Herstellung von auf $CaSO_4$ basierten pulverförmigen Erhärtungsbeschleunigern durch reaktive Sprühtrocknung, wobei a) eine wässrige, flüssige Calciumionen enthaltende Phase I und eine wässrige flüssige Sulfationen enthaltende Phase II, wobei das Molverhältnis der Calciumionen in der Phase I zu den Sulfationen in der Phase II von 1/5 bis 5/1 beträgt, an einer Sprühdüse, bevorzugt Mehrkanalsprühdüse, in Kontakt gebracht wird, b) die miteinander an der Sprühdüse, bevorzugt Mehrkanalsprühdüse, in Kontakt gebrachten Phasen I und II in einer strömenden Umgebung aus Trocknungsgas mit einer Eingangstemperatur im Bereich von 120 bis 300 °C und einer Ausgangstemperatur im Bereich von 60 bis 120 °C versprüht werden, wobei die Calciumionen mit den Sulfationen reagieren und unter Wasserentzug durch das Trocknungsgas der pulverförmige Erhärtungsbeschleuniger erhalten wird. Die Aufgabe wird auch gelöst durch die pulverförmigen Erhärtungsbeschleuniger herstellbar gemäß dem erfindungsgemäßen Verfahren und die Verwendung der pulverförmigen Erhärtungsbeschleuniger zur Beschleunigung des Erhärtens von Bassanit und/oder Anhydrit unter Entstehung von Gips.

Der nach dem erfindungsgemäßen Verfahren hergestellte pulverförmige Erhärtungsbeschleuniger besitzt eine hervorragende Wirksamkeit als Erhärtungsbeschleuniger für Bassanit und Anhydrit. Das einstufige Herstellungsverfahren, welches direkt zum Pulverprodukt führt, ist einfach und auch sehr wirtschaftlich, insbesondere weil es auch ohne relativ teure stabilisierende Polymerzusätze Erhärtungsbeschleuniger mit überraschend guter Effizienz hervorbringt.

Der auf $CaSO_4$ basierte pulverförmige Erhärtungsbeschleuniger enthält bevorzugt Bassanit ($CaSO_4 \cdot 0{,}5\ H_2O$)

und ist bevorzugt ein Erhärtungsbeschleuniger für die Bindemittel Bassanit (sowohl in der $\alpha$ - Form als auch der $\beta$ -Form) und auch Anhydrit ($CaSO_4$). Bevorzugter Anhydrit als Bindemittel ist thermischer Anhydrit, welcher aus der Rauchgasentschwefelung stammt und synthetischer Anhydrit, welcher aus der Produktion von Fluorsäure durch Umsetzen von Calciumfluorid mit Schwefelsäure stammt. Bevorzugt als Bindemittel ist Bassanit, besonders bevorzugt ist das als Bindemittel eingesetzte Bassanit zu mehr als 95 % kristallin. Reaktive Sprühtrocknung bedeutet bevorzugt ein Prozess bei dem eine chemische Reaktion, nämlich die Reaktion von Calciumionen und Sulfationen, und ein Sprühtrocknungsprozess kombiniert sind. Durch das miteinander in Kontakt bringen der Phasen I und II, welches einer Mischung der beiden Phasen gleichkommt, wird die chemische Reaktion unter Bildung von $CaSO_4$ basierten Produkten gestartet.

Der bei dem erfindungsgemäßen Verfahren erhaltene Erhärtungsbeschleuniger enthält vorzugsweise 25 bis 60 Gew. % Bassanit, besonders bevorzugt 30 bis 55 Gew. % Bassanit, vorzugsweise weniger als 5 Gew. % Anhydrit, besonders bevorzugt 1 bis 2 Gew. % Anhydrit und vorzugsweise weniger als 5 Gew. % Gips, besonders bevorzugt 1 bis 2 Gew. % Gips. Die vorstehend genannten Gewichtsangaben beziehen sich nur auf kristalline Phasen und stammen aus XRD Experimenten. Amorphe Bestandteile sind demnach nicht erfasst. Daneben sind natürlich noch bedingt durch die Wahl der Edukte Salze aus den Edukten enthalten, beispielsweise $MgCl_2 \cdot 6\ H_2O$ und $CaMgCl_4 \cdot 12\ H_2O$ bei Magnesiumsulfat und Calciumchlorid.

Als wasserlösliche Calciumverbindungen und wasserlösliche Sulfatverbindung in den Phasen I und II kommen jeweils prinzipiell auch nur verhältnismäßig schwach in Wasser lösliche Verbindungen in Frage, obwohl gut wasserlösliche Verbindungen, welche sich vollständig oder nahezu vollständig in Wasser lösen jeweils bevorzugt sind. Es muss jedoch gewährleistet sein, dass in wässriger Umgebung mit dem entsprechenden Reaktionspartner, also der wasserlöslichen Calciumverbindung und der wasserlöslichen Sulfatverbindungen, eine für die Umsetzung ausreichende Reaktivität vorliegt.

Neben Wasser und den jeweiligen Ionen können in der wässrigen, flüssigen Phase I oder II noch eines oder mehrere weitere Lösungsmittel enthalten sein. Beispielsweise ist Ethanol oder Isopropanol bevorzugt.

Bevorzugt ist die Konzentration der Calciumionen bei dem Verfahren in der flüssigen Phase I im Bereich von 0,1 bis 3 mol/l, besonders bevorzugt von 0,3 bis 2,5 mol/l , insbesondere bevorzugt von 0,5 bis 2,1 mol/l und insbesondere bevorzugt von 0,5 bis 2,0 mol/l, am meisten bevorzugt von 0,5 bis 1,5 mol/l. Bevorzugt ist die Konzentration der Sulfationen in der flüssigen Phase II im Bereich von 0,1 bis 3 mol/l, besonders bevorzugt von 0,3 bis 2,5 mol/l, insbesondere bevorzugt von 0,5 bis 2,1 mol/l und insbesondere bevorzugt von 0,5 bis 2,0 mol/l, am meisten bevorzugt von 0,5 bis 1,5 mol/l. Besonders bevorzugt ist die jeweilige Konzentration der Calciumionen in der flüssigen Phase I und der Sulfationen in der flüssigen Phase II in den vorstehend angegebenen bevorzugten Bereichen. Alle vorstehend gemachten Angaben zur Konzentration der Calciumionen und der Sulfationen beziehen sich auf das Lösungsmittel Wasser und eine Temperatur von 20 °C und Normaldruck. Es ist auch möglich die Zuführgeschwindigkeiten als auch die Konzentration der Calciumionen in der flüssigen Phase I und der Sulfationen in der flüssigen Phase II während des Verfahrens zu variieren, wodurch zu jedem Zeitpunkt des Verfahrens die miteinander in Kontakt gebrachten Mengen an Calciumionen und Sulfationen verschieden sein können. Bevorzugt ist ein Verfahren bei dem das Molverhältnis von Calciumionen in der flüssigen Phase I zu den Sulfationen aus der flüssigen Phase II konstant ist.

Das Molverhältnis der Calciumionen zu den Sulfationen beträgt von 1/5 bis 5/1, bevorzugt von 1/3 bis 3/1, insbesondere bevorzugt von 1/2 bis 2/1, noch bevorzugter von 1/1,5 bis 1,5/1 und am meisten bevorzugt von 1/1,2 bis 1,2/1. Bevorzugt ist das Molverhältnis der Calciumionen zu den Sulfationen definiert als das Molverhältnis der im Verfahren eingesetzten Gesamtmenge an Calciumionen und Sulfationen. Ein Überschuss an Calcium zu Sulfat oder umgekehrt, also eine Abweichung vom stöchiometrischen Molverhältnis von 1/1, ist möglich. Allerdings ist es vorteilhaft das Verhältnis von Calcium zu Sulfat nahe zum Bereich von 1/1 zu wählen.

Die Calciumionen enthaltende Phase I wird mit der Sulfationen enthaltenden Phase II bevorzugt an der Sprühdüse in Kontakt gebracht und versprüht, wobei die Bildung von Calciumsulfat basierten Reaktionsprodukten erfolgt. Danach erfolgt im Schritt b) die Trocknung durch den Sprühtrocknungsprozess. Die Schritte a) und b) werden bevorzugt kontinuierlich ausgeführt, erfordern also keinen extra Arbeitsaufwand im Sinne einer durchzuführenden Abfolge von Verfahrensmaßnahmen im Experiment oder in der Produktion. Bevorzugt werden insbesondere kontinuierlich zugeführt die flüssigen Phasen I und II, ebenfalls das Zerstäubergas und das zur Trocknung nötige heiße Trocknungsgas. Bevorzugt durch eine geeignete Abscheideeinrichtung für pulverförmige Produkte wird das Endprodukt kontinuierlich abgeführt. Dem Fachmann sind aus dem Bereich der Sprühtrocknungstechnik die entsprechenden Maßnahmen zur Optimierung der Parameter Zuführrate der Phasen I und II, Zuführrate des Zerstäubergases und des Trocknungsgases zusammen mit der erforderlichen Abführrate des Endprodukts hinlänglich bekannt, bzw. können optimiert werden. Die erforderliche Verweildauer wird optimiert um einen möglichst hohen Produktdurchsatz bei gleichbleibend guter Produktqualität (Effizienz als Erhärtungsbeschleuniger und Trocknungsgrad) zu erzielen. Bevorzugt ist das Verfahren dadurch gekennzeichnet, dass die durchschnittliche Verweilzeit im Sprühtrocknungsreaktor von 0,5 bis 120 Sekunden beträgt.
Bevorzugt ist das erfindungsgemäße Verfahren ein kontinuierlich betriebenes Verfahren. Bevorzugt wird das Verfahren betrieben ohne eventuelle Nebenprodukte abzutrennen.

Bevorzugt beträgt der Feststoffgehalt der auf $CaSO_4$ basierenden pulverförmigen Erhärtungsbeschleuniger

mehr als 70 Gew. %, besonders bevorzugt mehr als 75 Gew. % und insbesondere bevorzugt von 75 bis 85 Gew. %. Für die Bestimmung des Feststoffgehaltes wurde ein HR73 Halogen Moisture Analyzer der Firma Mettler Toledo verwendet. Ca. 1 g Probe wurden auf Wägeschalen aus Aluminium, 100 mm Durchmesser x 7 mm Höhe eingewogen (= Gewicht (t=0)) und in dem Gerät platziert. Die Probe wurde bis zur Gewichtskonstanz (5s) bei 130 °C getrocknet.

$$\text{Feststoffgehalt (Gew. \%)} = \text{Endgewicht (t=Ende)} / \text{Gewicht (t=0)} \cdot 100\ \%.$$

Bevorzugt enthält der auf $CaSO_4$ basierende pulverförmige Erhärtungsbeschleuniger weniger als 30 Gew. % Wasser, besonders bevorzugt weniger als 25 Gew. % Wasser, insbesondere bevorzugt von 25 bis 15 Gew. % Wasser, wobei der Wassergehalt der Erhärtungsbeschleunigerproben nach der vorstehend genannten Methode zur Bestimmung des Feststoffgehalts nach der folgenden Formel errechnet wird: Wassergehalt (Gew. %) = 100 Gew. % - Feststoffgehalt (Gew. %)

Salzverbindungen haben bekanntlich auch sogenanntes Kristallwasser. Bei dem nach der vorstehend genannten Methode bestimmten Wassergehalt handelt es sich also nicht zwangsläufig um den absoluten Wassergehalt (freies Wasser plus Kristallwasser), da es bekanntlich meist sehr schwierig sein wird auch das Kristallwasser aus Salzen durch entsprechende thermische Behandlung und unter einer Vermeidung von Zersetzungsreaktionen vollständig zu entfernen. Es handelt sich vielmehr um den Wassergehalt, der nach der angegebenen Methode ermittelt wird.

Überraschenderweise wurde festgestellt, dass besonders effektive Erhärtungsbeschleuniger aus dem erfindungsgemäßen Verfahren erhalten werden, welche auch ohne Zusatz von stabilisierenden Zusätzen wie Polymeren erhalten werden können. Es wird vermutet, dass durch die rasche Trocknung der vermischten flüssigen Phasen I und II Erhärtungsbeschleuniger mit besonders niedrigen Kristallitgrößen erhalten werden können. Diese sind besonders effizient als Erhärtungsbeschleuniger.

Zur Durchführung des erfindungsgemäßen Verfahrens eigenen sich alle herkömmlichen Sprühvorrichtungen.

Geeignete Sprühdüsen sind Mehrkanaldüsen wie Zweistoffdüsen, Dreikanaldüsen oder Vierkanaldüsen. Solche Düsen können auch als sogenannte " Ultraschalldüsen" ausgestaltet sein. Solche Düsen sind an sich kommerziell erhältlich.

Weiterhin kann je nach Düsentyp auch ein Zerstäubungsgas zugeführt werden. Als Zerstäubungsgas kann Luft oder ein Inertgas wie Stickstoff oder Argon eingesetzt werden. Der Gasdruck des Zerstäubungsgases kann bis zu 1 MPa absolut, vorzugsweise 0.12 bis 0.5 MPa absolut betragen.

Gemäß einer Ausführungsform eignen sich auch spezielle Düsen, in denen die verschiedenen flüssigen Phasen innerhalb des Düsenkörpers vermischt und dann zerstäubt werden.

Eine Ausführungsform der Erfindung betrifft Ultraschalldüsen. Ultraschalldüsen können mit oder ohne Zerstäubungsgas betrieben werden. Bei Ultraschalldüsen erfolgt die Zerstäubung dadurch, dass die zu zerstäubende Phase in Schwingungen versetzt wird. Je nach Düsengröße und Ausführung können die Ultraschalldüsen mit einer Frequenz von 16 bis 120 kHz betrieben werden.

Der Durchsatz an zu versprühender Flüssigphase pro Düse richtet sich nach der Düsengröße. Der Durchsatz kann 500 g/h bis 1000 kg/h betragen. Bei der Herstellung kommerzieller Mengen liegt der Durchsatz vorzugsweise im Bereich von 10 bis 1000 kg/h.

Wenn kein Zerstäubungsgas verwendet wird, so kann der Flüssigkeitsdruck 0.2 bis 20 MPa absolut betragen. Wird ein Zerstäubungsgas verwendet so kann die Flüssigkeit drucklos zugeführt werden.

Weiterhin wird der Sprühtrocknungsvorrichtung ein Trocknungsgas wie Luft oder eines der erwähnten Inertgase zugeführt. Das Trocknungsgas kann im Gleich- oder im Gegenstrom zu der versprühten Flüssigkeit zugeführt werden, vorzugsweise im Gleichstrom. Die Eingangstemperatur des Trocknungsgases kann 120 bis 300 °C, vorzugsweise 150 bis 200 °C betragen, die Ausgangstemperatur 60 bis 120 °C.

Wie bereits erwähnt, richten sich die Größenordnungen der zu verwendenden Sprühparameter wie Durchsatz, Gasdruck oder Düsendurchmesser entscheidend nach der Größe der Vorrichtungen. Die Vorrichtungen sind kommerziell erhältlich und üblicherweise werden vom Hersteller entsprechende Größenordnungen empfohlen.

Erfindungsgemäß wird das Sprühverfahren vorzugsweise so betrieben, dass die mittlere Tropfengröße der versprühten Phasen 5 bis 2.000 $\mu$m, bevorzugt 5 bis 500 $\mu$m, besonders bevorzugt 5 bis 200 $\mu$m, beträgt. Die mittlere Tropfengröße kann mittels Laserbeugung oder Hochgeschwindigkeitskameras gekoppelt mit einer Bildauswertung ermittelt werden.

Die vorstehenden Ausführungen zum Sprühverfahren können auf alle nachfolgend geschilderten bevorzugten und besonders bevorzugten Ausführungsformen angewendet werden. Bevorzugte Sprühparameter sind auch im Zusammenhang mit den nachstehenden Ausführungsformen bevorzugt.

Bevorzugt ist ein Verfahren, dadurch gekennzeichnet, dass die Sprühdüse eine Mehrkanaldüse ist.

Die Versprühung der miteinander an der Sprühdüse in Kontakt gebrachten Phasen I und II erfolgt bevorzugt

durch eine Mehrkanaldüse.
Bevorzugt kann die Mehrkanaldüse eine Dreikanaldüse oder auch eine Zweikanaldüse sein. Im Fall der Dreikanaldüse wird bei einem der drei Kanäle bevorzugt ein Zerstäubergas, besonders bevorzugt Luft oder Stickstoff, eingesetzt, die anderen beiden Kanäle sind für die Phasen I und II. Im Fall einer Zweikanaldüse wird die erforderliche Zerstäubung der Phasen I und II entweder durch den Einsatz von Ultraschall erzielt oder durch den Einsatz einer Zentrifugalkraftdüse.
Bevorzugt ist der Einsatz einer Dreikanaldüse mit einem Kanal für das Zerstäubergas und zwei Kanälen für die Phasen I und II. Die Kanäle für die Phasen I und II sind sowohl im Fall einer Zweikanaldüse, als auch einer Dreikanaldüse getrennt um eine vorzeitige Vermischung der Phasen zu vermeiden. Die Phasen I und II werden erst am Austritt der beiden Kanäle für die Phasen I und II der Sprühdüse miteinander in Kontakt gebracht. Das Zerstäubergas bewirkt die Bildung feiner Tröpfchen (eine Art Nebel) aus den miteinander in Kontakt gebrachten Phasen I und II.

Bevorzugt ist ein Verfahren, dadurch gekennzeichnet, dass die Mehrkanaldüse mindestens zwei Kanäle besitzt, in denen die wässrige, flüssige Calciumionen enthaltende Phase I und die wässrige, flüssige Sulfationen enthaltende Phase II separat in den zwei Kanälen zugeführt werden und die Phasen I und II am Austritt der Kanäle der Düse miteinander in Kontakt gebracht werden.

Bevorzugt ist ein Verfahren, wobei als Phase I eine wässrige Lösung eines Calciumsalzes eingesetzt wird und als Phase II eine wässrige Lösung eines Sulfatsalzes oder einer Sulfationen bildenden Säure eingesetzt wird, dadurch gekennzeichnet, dass die Löslichkeit des Calciumsalzes in der wässrigen Phase I größer als 0,1 mol/l ist und die Löslichkeit des Sulfatsalzes oder der Sulfationen bildenden Säure in der wässrigen Phase II größer als 0,1 mol/l ist, wobei alle Löslichkeiten sich auf die Temperatur von 20 °C und Normaldruck beziehen. Die Bildung von Calciumsulfat aus leichtlöslichen Calciumsalzen und leichtlöslichen Sulfatsalzen ist kinetisch und thermodynamisch besonders bevorzugt und in der Praxis besonders leicht auch mit hohen Umsatzraten durchführbar.

Bevorzugt ist ein Verfahren dadurch gekennzeichnet, dass die Konzentration der Calciumionen in der Phase I von 0,1 mol/l bis 3,5 mol/l beträgt und die Konzentration der Sulfationen in der Phase II von 0,1 mol/l bis 3,5 mol/l beträgt.

Bevorzugt ist ein Verfahren dadurch gekennzeichnet, dass als Calciumsalz ein Salz aus der Reihe Calciumacetat, Calciumformiat, Calciumchlorid, Calciumbromid, Calciumiodid, Calciumhydroxid, Calciumsulfamidat, Calciumlactat, Calciummethansulfonat, Calciumpropionat, Calciumnitrat und/oder Calciumcarbonat eingesetzt wird.

Calciumcarbonat ist aufgrund seiner geringen Löslichkeit in Wasser weniger geeignet, es ist allerdings insbesondere bei niedrigen pH-Werten eine mögliche Option oder auch bei der Verwendung von Schwefelsäure als Sulfationenquelle.

Bevorzugt ist ein Verfahren dadurch gekennzeichnet, dass als Sulfatsalz Alkalisulfate, Ammoniumsulfat, Aluminiumsulfat und/oder Magnesiumsulfat oder als Sulfationen bildende Säure Schwefelsäure eingesetzt wird. Die genannten Sulfate sind insbesondere aufgrund ihrer guten Löslichkeit in Wasser geeignet. Bevorzugte Alkalisulfate sind Natriumsulfat und Kaliumsulfat.

Bevorzugt ist ein Verfahren dadurch gekennzeichnet, dass beim Versprühen der Phasen I und II Tröpfchen mit einer mittleren Tropfengröße von 5 bis 2.000 $\mu$m erzeugt werden.
Die mittlere Tropfengröße kann bestimmt werden durch Laserbeugung während des reaktiven Sprühtrocknungsprozesses oder Hochgeschwindigkeitskameras gekoppelt mit einer Bildauswertung.

Bevorzugt ist ein Verfahren dadurch gekennzeichnet, dass eine der Phasen I oder II oder beide Phasen I und II ein säuregruppenhaltiges Polymer oder dessen Salz mit einem mittleren Molekulargewicht $M_w$ von 5.000 g/mol bis 100.000 g/mol enthält oder enthalten.

Beispielsweise kann das säuregruppenhaltige Polymer aus der Reihe Polyacrylsäure, Polymethacrylsäure, Polyvinylphosphonsäure und Copolymere enthaltend Acrylsäure, Methacrylsäure, Vinylsulfonsäure, 2-Acrylamido-2-methylpropansulfonsäure und Vinylphosphonsäure ausgewählt werden. Insbesondere bevorzugt sind Polyacrylsäure, Polymethacrylsäure und Polyvinylphosphonsäure.

Bezüglich der Salze der säuregruppenhaltigen Polymere gilt, dass diese bevorzugt als Ammoniumsalz, Alkalisalz und/oder Erdalkalisalz vorliegen können. Besonders bevorzugt sind Ammoniumsalze und/oder Alkalisalze. Erdalkalisalze haben die Tendenz mit Polyelektrolyten unerwünschte Gelbildung einzugehen, wodurch deren Verwendbarkeit eingeschränkt ist. Falls ein Calciumsalz zum Einsatz kommt, müsste die entsprechende Menge an Calciumionen bei der Berechnung der im Verfahren eingesetzten Calciumionenmenge berücksichtigt werden. Das Calciumsalz des säuregruppenhaltigen Polymers sollte in diesem Fall bevorzugt in der flüssigen Phase I und nicht in der sulfathaltigen flüssigen Phase II eingesetzt werden wegen einer unerwünschten vorzeitigen Bildung von $CaSO_4$ Salzen in dem Kanal. Alle Erdalkalisalze mit Ausnahme von Magnesium und insbesondere Calciumsalze der säuregruppenhaltigen Polymere sind weniger bevorzugt.

Bevorzugt ist ein Verfahren, dadurch gekennzeichnet, dass bezogen auf die Masse des $CaSO_4$ zwischen 0,005 und 100 Gew.-%, bevorzugt 0,1 und 50 Gew. % , besonders bevorzugt 0,3 und 10 Gew. %, insbesondere bevorzugt zwischen 0,5 und 5 Gew. % des säuregruppenhaltigen Polymers oder dessen Salzes eingesetzt wird.

Die säuregruppenhaltigen Polymere helfen neben der schnellen Trocknung der frisch gebildeten $CaSO_4$ Partikel im Sprühtrocknungsprozess dabei mit feinteilige Partikel von $CaSO_4 \cdot 0{,}5\ H_2O$ zu stabilisieren und eine Konglomeration

zu verhindern. Dadurch wird die Wirksamkeit der Erhärtungsbeschleuniger positiv beeinflusst.

Bevorzugt ist ein Verfahren dadurch gekennzeichnet, dass es sich bei der Säuregruppe des Polymers um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handelt. Besonders bevorzugt sind Carboxy- und Phosphonooxygruppen.

Bevorzugt ist ein Verfahren dadurch gekennzeichnet, dass das säuregruppenhaltige Polymer Polyethergruppen enthält. Durch die Polyethergruppen wird die Löslichkeit und Effizienz der Polymere als Stabilisator verbessert.

Bevorzugt ist ein Verfahren dadurch gekennzeichnet, dass das säuregruppenhaltige Polymer, bevorzugt säuregruppenhaltige Copolymer, Polyethergruppen der Struktureinheit (I) umfasst,

$$*\text{-U-(C(O))}_k\text{-X-(AlkO)}_n\text{-W} \qquad (I)$$

wobei

| | |
|---|---|
| * | die Bindungsstelle an das säuregruppenhaltige Polymer anzeigt, |
| U | für eine chemische Bindung oder eine Alkylengruppe mit 1 bis 8 C-Atomen steht, |
| X | Sauerstoff oder eine Gruppe $NR^1$ bedeutet, |
| k | 0 oder 1 ist, |
| n | für eine ganze Zahl steht, deren Mittelwert, bezogen auf das säuregruppenhaltige Polymer im Bereich von 3 bis 300 liegt, |
| Alk | für Alkylen, bevorzugt $C_2$-$C_4$-Alkylen steht, wobei Alk innerhalb der Gruppe $(Alk\text{-}O)_n$ gleich oder verschieden sein kann, |
| W | einen Wasserstoff-, einen Alkylrest, bevorzugt einen $C_1$-$C_6$-Alkylrest, oder einen Arylrest bedeutet oder W die Gruppe Y-F bedeutet, wobei |
| Y | für eine lineare oder verzweigte Alkylengruppe mit 2 bis 8 C-Atomen steht, die einen Phenylring tragen kann, |
| F | für einen über Stickstoff gebundenen 5- bis 10-gliedrigen Stickstoffheterocyclus steht, der als Ringglieder, neben dem Stickstoffatom und neben Kohlenstoffatomen, 1 , 2 oder 3 zusätzliche Heteroatome, ausgewählt unter Sauerstoff, Stickstoff und Schwefel aufweisen kann, wobei die Stickstoffringglieder eine Gruppe $R^2$ aufweisen können, und wobei 1 oder 2 Kohlenstoffringglieder als Carbonylgruppe vorliegen können, |
| $R^1$ | für Wasserstoff, $C_1$-$C_4$-Alkyl oder Benzyl steht, und |
| $R^2$ | für Wasserstoff, $C_1$-$C_4$-Alkyl oder Benzyl steht. |

Bevorzugt ist ein Verfahren dadurch gekennzeichnet, dass das säuregruppenhaltige Polymer ein Polykondensationsprodukt darstellt, enthaltend

(II) eine einen Aromaten oder Heteroaromaten und eine Polyethergruppe der Struktureinheit (I) aufweisende Struktureinheit,

(III) eine phosphatierte einen Aromaten oder Heteroaromaten aufweisende Struktureinheit.

Bevorzugt ist U in der Struktureinheit (I) eine chemische Bindung und k ist bevorzugt 0 wenn die Struktureinheit (I) in der Struktureinheit (II) eine einen Aromaten oder Heteroaromaten und eine Polyethergruppe der Struktureinheit (I) aufweisenden Struktureinheit vorliegt.

Bevorzugt ist ein Verfahren dadurch gekennzeichnet, dass die Struktureinheiten (II) und (III) erhalten werden durch Einpolymerisation von Monomeren, bevorzugt durch Polykondensation von Monomeren, welche durch folgende allgemeine Formeln repräsentiert werden

$$(IIa) \qquad \text{A-U-(C(O))}_k\text{-X-(AlkO)}_n\text{-W}$$

mit

A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) vorstehend genannte Bedeutung besitzen, bevorzugt ist A ein Phenylrest, U ist bevorzugt eine chemische Bindung, k ist bevorzugt 0, X ist bevorzugt Sauerstoff und W ist bevorzugt ein Alkylrest oder Wasserstoff,

(III)

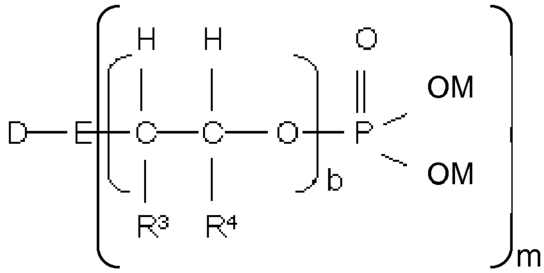

mit
D gleich oder verschieden sowie repräsentiert durch eine substituierte oder unsubstituierte aromatische oder heteroaromatische Verbindung mit 5 bis 10 C-Atomen im aromatischen System
mit
E gleich oder verschieden sowie repräsentiert durch N, NH oder O

mit
m = 2 falls E = N und m = 1 1 falls E = NH oder O
mit
$R^3$ und $R^4$ unabhängig voneinander gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H, bevorzugt sind $R^3$ oder $R^4$ H, besonders bevorzugt sind $R^3$ und $R^4$ H,
mit b
gleich oder verschieden sowie repräsentiert durch eine ganze Zahl von 0 bis 300, bevorzugt 1 bis 300, besonders bevorzugt 1 bis 100, insbesondere bevorzugt 1 bis 5 und
mit M gleich H oder ein Kationäquivalent.

Die Phosphatester der allgemeinen Formel (III) können in der Säureform mit zwei H Atomen (M = H) vorliegen. Die Phosphatester können auch in ihrer deprotonierten Form vorliegen, wobei das H Atom durch ein Kationäquivalent ersetzt ist. Ein partieller Ersatz der H Atome durch ein Kationäquivalent ist ebenfalls möglich. Der Begriff Kationäquivalent bedeutet bevorzugt ein beliebiges Metallion oder ein optional substituiertes Ammoniumion, welches das Proton der Säure ersetzen kann, unter der Voraussetzung, dass die Strukturen gemäß (III) elektrisch neutral sind. Deswegen muss beispielsweise im Fall eines Erdalkalimetalls (zwei positive Ladungen) ein Faktor ½ angewandt werden um die Neutralität zu gewährleisten (zum Beispiel M = ½ Erdalkalimetall), im Fall von Aluminium als Kationäquivalent würde M = 1/3 Al lauten. Gemischte Kationäquivalente mit zum Beispiel zwei oder mehr verschiedenen Kationäquivalenten sind ebenfalls möglich.
M ist bevorzugt H, $NH_4$, ein Alkalimetall oder ½ Erdalkalimetall, besonders bevorzugt ist M H, ein Alkalimetall und/oder $NH_4$.
Bevorzugt ist ein Verfahren dadurch gekennzeichnet, dass das Polykondensationsprodukt eine weitere Struktureinheit (IV) enthält, welche durch folgende Formel repräsentiert wird

(IV)

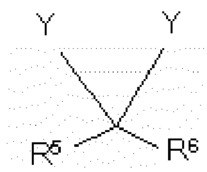

mit
Y unabhängig voneinander gleich oder verschieden und repräsentiert durch (II), (III) oder weitere Bestandteile des Polykondensationsproduktes, $R^5$ und $R^6$ sind bevorzugt gleich oder verschieden und repräsentiert durch H, $CH_3$, COOH oder eine substituierte oder unsubstituierte aromatische oder heteroaromatische Verbindung mit 5 bis 10 C-Atomen.
Weitere Bestandteile des Polykondensationsproduktes können beispielsweise Phenol oder methylsubstituierte Phenole (Kresole) sein. Deren Gehalt macht vorzugsweise weniger als 30 Mol % bezüglich aller aromatischen Struktureinheiten gemäß der Struktureinheiten (II) und (III) aus.

Hierbei werden $R^5$ und $R^6$ in Struktureinheit (IV) unabhängig voneinander bevorzugt durch H, COOH und/oder Methyl repräsentiert.
In einer besonders bevorzugten Ausführungsform werden $R^5$ und $R^6$ durch H repräsentiert.

Das molare Verhältnis der Struktureinheiten (II), (III) und (IV) des erfindungsgemäßen phosphatierten Polykondensationsproduktes kann in weiten Bereichen variiert werden. Als zweckmäßig hat es sich erwiesen, dass das Molverhältnis der Struktureinheiten [(II) + (III)] : (IV) 1 : 0,8 bis 3, bevorzugt 1 : 0,9 bis 2 und besonders bevorzugt 1: 0,95 bis 1,2 beträgt.

Das Molverhältnis der Struktureinheiten (II) : (III) liegt normalerweise bei 1 : 10 bis 10 : 1, bevorzugt bei 1 : 7 bis 5 : 1 und besonders bevorzugt bei 1 : 5 bis 3 : 1.

Die Gruppen A und D in den Struktureinheiten (II) und (III) des Polykondensationsproduktes werden meist durch Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl repräsentiert, wobei A und D unabhängig voneinander gewählt werden können und auch jeweils aus einem Gemisch der genannten Verbindungen bestehen können. Die Gruppen X und E werden unabhängig voneinander bevorzugt durch O repräsentiert.

Bevorzugt wird n in Struktureinheit (I) durch eine ganze Zahl von 5 bis 280, insbesondere 10 bis 160 und besonders bevorzugt 12 bis 120 repräsentiert und b in Struktureinheit (III) durch eine ganze Zahl von 0 bis 10, bevorzugt 1 bis 7 und besonders bevorzugt 1 bis 5. Die jeweiligen Reste, deren Länge durch n bzw. b definiert wird, können hierbei aus einheitlichen Baugruppen bestehen, es kann aber auch zweckmäßig sein, dass es sich um eine Mischung aus unterschiedlichen Baugruppen handelt. Weiterhin können die Reste der Struktureinheiten (II) und (III) unabhängig voneinander jeweils die gleiche Kettenlänge besitzen, wobei n bzw. b jeweils durch eine Zahl repräsentiert wird. Es wird aber in der Regel zweckmäßig sein, dass es sich jeweils um Mischungen mit unterschiedlichen Kettenlängen handelt, so dass die Reste der Struktureinheiten im Polykondensationsprodukt für n und unabhängig für b unterschiedliche Zahlenwerte aufweisen.

In einer besonderen Ausführungsform sieht die vorliegende Erfindung weiterhin vor, dass es sich um ein Natrium-, Kalium- und/oder Ammoniumsalz des phosphatierten Polykondensationsproduktes handelt.

Häufig weist das erfindungsgemäße phosphatierte Polykondensationsprodukt ein gewichtsmittleres Molekulargewicht von 4.000 g/mol bis 150.000 g/mol, vorzugsweise 10.000 bis 100.000 g/mol und besonders bevorzugt 20.000 bis 75.000 g/mol auf. Bezüglich der gemäß vorliegender Erfindung bevorzugt zu verwendenden phosphatierten Polykondensationsprodukte und deren Herstellung wird weiterhin auf die Patentanmeldungen WO 2006/042709 und WO 2010/040612 Bezug genommen, deren Inhalt hiermit in die Anmeldung aufgenommen wird.

Bevorzugt ist ein Verfahren dadurch gekennzeichnet, dass das säuregruppenhaltige Polymer mindestens ein Copolymer darstellt, welches erhältlich ist durch Polymerisation einer Mischung von Monomeren, umfassend

(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und

(VI) mindestens ein ethylenisch ungesättigtes Monomer mit einer Polyethergruppe der Struktureinheit (I).

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

Bevorzugt ist ein Verfahren dadurch gekennzeichnet, dass das ethylenisch ungesättigte Monomer (V) durch mindestens eine der folgenden allgemeinen Formeln aus der Gruppe (Va), (Vb) und (Vc) repräsentiert wird

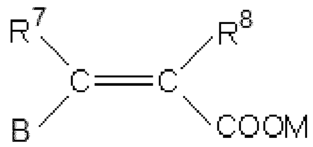
(Va)

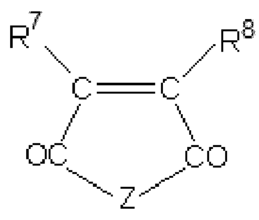
(Vb)

wobei

| | |
|---|---|
| $R^7$ und $R^8$ | unabhängig voneinander für Wasserstoff oder einen aliphatischen Kohlenwasserstoffrest mit 1 bis 20 C-Atomen |

B für H, -COOM, $-CO-O(C_qH_{2q}O)_r-R^9$, $-CO-NH-(C_qH_{2q}O)_r-R^9$
M für H oder ein Kationäquivalent steht,
$R^9$ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen gegebenenfalls substituierten Arylrest mit 6 bis 14 C-Atomen
q unabhängig voneinander für jede $(C_qH_{2q}O)$-Einheit gleich oder verschieden 2, 3 oder 4, bevorzugt 2, und
r für 0 bis 200
Z für O, $NR^3$,

stehen,
wobei $R^3$ ist gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H,

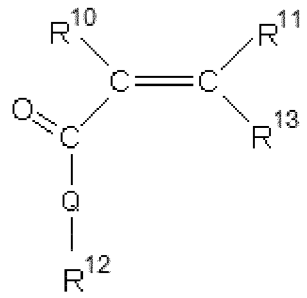

(Vc)

mit

$R^{10}$ und $R^{11}$ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen

$R^{12}$ gleich oder verschieden sowie repräsentiert durch $(C_nH_{2n})-SO_3M$ mit n = 0, 1, 2, 3 oder 4, $(C_nH_{2n})-OH$ mit n = 0, 1, 2, 3 oder 4; $(C_nH_{2n})-PO_3M_2$ mit n = 0, 1, 2, 3 oder 4, $(C_nH_{2n})-OPO_3M_2$ mit n= 0, 1, 2, 3 oder 4, $(C_6H_4)-SO_3M$, $(C_6H_4)-PO_3M_2$, $(C_6H_4)-OPO_3M_2$ und $(CnH_{2n})-NR^{14}b$ mit n = 0, 1, 2, 3 oder 4 und b = 2 oder 3

$R^{13}$ für H, -COOM, $-CO-O(C_qH_{2q}O)_r-R^9$, $-CO-NH-(C_qH_{2q}O)_r-R^9$, wobei M, $R^9$, q und r oben genannte Bedeutungen besitzen

$R^{14}$ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

Q gleich oder verschieden sowie repräsentiert durch NH, $NR^{15}$ oder O; wobei $R^{15}$ für einen aliphatischen Kohlenwasserstoffrest mit 1 bis 10 C-Atomen, einen cycloaliphatischen Kohlenwasserstoffrest mit 5 bis 8 C-Atomen oder ein gegebenenfalls substituierter Arylrest mit 6 bis 14 C-Atomen steht.

M ist H oder ein Kationäquivalent, bevorzugt H, $NH_4$, ein Alkalimetall oder ½ Erdalkalimetall, besonders bevorzugt ist M H, ein Alkalimetall und/oder $NH_4$.

Bei dem Mono- oder Dicarbonsäure-Derivat (Va) und dem in cyclischer Form vorliegenden Monomer (Vb), wobei Z = O (Säureanhydrid) oder $NR^7$ (Säureimid) darstellen, steht $R^7$ und $R^8$ unabhängig voneinander für Wasserstoff oder einen aliphatischen Kohlenwasserstoffrest mit 1 bis 20 C-Atomen, vorzugsweise eine Methylgruppe. B bedeutet H, -COOM, $-CO-O(C_qH_{2q}O)_r-R^9$, $-CO-NH-(C_qH_{2q}O)_r-R^9$. M bedeutet bevorzugt Wasserstoff oder ein Kationäquivalent, bevorzugt ein ein- oder ½ zweiwertiges Metallkation, vorzugsweise Natrium-, Kalium-, ½ Calcium- oder ½ Magnesium-Ion, weiterhin Ammonium oder ein organischer Aminrest. Als organische Aminreste werden vorzugsweise substituierte Ammonium-Gruppen eingesetzt, die sich ableiten von primären, sekundären oder tertiären $C_{1-20}$-Alkylaminen, $C_{1-20}$-Alkanolaminen, $C_{5-8}$-Cycloalkylaminen und $C_{6-14}$-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

$R^9$ bedeutet Wasserstoff, ein aliphatischer Kohlenwasserstoffrest mit 1 bis 20 C-Atomen, ein cycloaliphatischer

Kohlenwasserstoffrest mit 5 bis 8 C-Atomen, ein Arylrest mit 6 bis 14 C-Atomen, der ggf. noch substituiert sein kann, q = 2 , 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

In einer besonders bevorzugten Ausführungsform wird das ethylenisch ungesättigte Monomer (VI) durch folgende allgemeine Formeln repräsentiert

(VI)

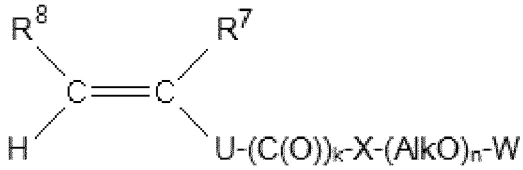

worin alle Reste die vorstehend genannten Bedeutungen aufweisen.

Hinsichtlich des erfindungsgemäßen Verfahrens, wird bezogen auf die Summe der eingesetzten Massen an Calcium und Sulfat bevorzugt zwischen 0,005 und 100 Gew.-%, insbesondere zwischen 0,01 und 50 Gew.-%, insbesondere bevorzugt zwischen 0,02 und 30 Gew.-%, besonders bevorzugt zwischen 0,03 und 15 Gew.-% und am meisten bevorzugt zwischen 0,05 und 10 Gew.-% des säuregruppenhaltigen Polymers eingesetzt.

Die Erfindung betrifft auch pulverförmige Erhärtungsbeschleuniger herstellbar nach dem erfindungsgemäßen Verfahren.

Bevorzugt beträgt die Kristallitgröße des Bassanits enthalten in den Erhärtungsbeschleunigern herstellbar nach dem erfindungsgemäßen Verfahren von 1 bis 45 nm, besonders bevorzugt von 1 bis 40 nm, insbesondere bevorzugt von 1 bis 30 nm und am meisten bevorzugt von 5 bis 30 nm.

Die Bestimmung der Kristallitgröße der pulverförmigen Erhärtungbeschleuniger, insbesondere des darin enthaltenen Bassanits, erfolgte mittels Röntgenbeugung (XRD, Bruker D8 Discover) mit anschließender Rietveld-Analyse (The Rietveld Method, edited by R. A. Young, 2002, International Union of Crystallography monographs on crystallography: 5, ISBN 0-19-855912-7). Die Messung wurde mit CuK$\alpha$ -Strahlung in einem Messbereich $2\theta$ = 5-60 ° mit einer Schrittweite von 0,02 ° und einer Zählzeit pro Schritt von 0,4 Sekunden durchgeführt. Für die Rietveld-Auswertung wurde die Software Topas 4.2 mit Fundamentalparameteransatz der Firma Bruker verwendet. Die Bestimmung der Kristallitgröße der Phase Bassanit beruht dabei auf der Verfeinerung und Anpassung der Beugungsmusters der Struktur für Bassanit (ICSD Database # 79529). Ausgewertet wurde dabei die Lorentz-Kristallitgröße (Topas Parameter "Cry Size L" in nm), die sich anhand der angepassten Peakbreiten aus der Verfeinerung ergibt. Zu beachten ist dabei, dass die Kristallitgrößen nicht zwangsläufig mit den Partikelgrößen gleichzusetzen sind.

Die Erfindung betrifft auch die Verwendung des pulverförmigen Erhärtungsbeschleunigers herstellbar nach dem erfindungsgemäßen Verfahren zur Beschleunigung des Erhärtens von Bassanit und/oder Anhydrit unter Entstehung von Gips.

Bevorzugt ist das Bassanit (Bindemittel) dessen Erhärten beschleunigt wird gekennzeichnet dadurch, dass die Kristallitgröße größer ist als 50 nm, besonders bevorzugt größer als 60 nm und insbesondere bevorzugt größer als 70 nm, wobei die Bestimmung der Kristallitgröße nach der vorstehend genannten Methode mittels Röntgenbeugung erfolgt.

Bevorzugt beträgt die Dosierung des Erhärtungsbeschleunigers herstellbar nach dem erfindungsgemäßen Verfahren von 0,01 bis 1 Gew. %, besonders bevorzugt von 0,02 bis 0,5 Gew. %, insbesondere bevorzugt von 0,025 bis 0,1 Gew. % bezogen auf die Masse $CaSO_4$ im jeweiligen Bindemittel (Bassanit oder Anhydrit).

Bevorzugt ist die Verwendung des pulverförmigen Erhärtungsbeschleunigers herstellbar nach dem erfindungsgemäßen Verfahren zur Beschleunigung des Erhärtens von Bassanit und/oder Anhydrit unter Entstehung von Gips zur Herstellung einer Gipskartonplatte.

Bei der Verwendung der erfindungsgemäßen Erhärtungsbeschleuniger zur beschleunigten Erhärtung von Anhydrit Fliessestrichen hat sich als besonders vorteilhaft erwiesen, dass das sogenannte Bluten (Auftreten von freiem Wasser an der Oberfläche des Estrichs) weitgehend vermieden, bzw. verhindert werden kann.

Bevorzugt ist die Verwendung des pulverförmigen Erhärtungsbeschleunigers herstellbar nach dem erfindungsgemäßen Verfahren zur Beschleunigung des Erhärtens von Bassanit und/oder Anhydrit unter Entstehung von Gips in $\alpha$ Bassanit Spachtelmassen und Anhydrit basierten Fließestrichen.

Die nachfolgenden Beispiele verdeutlichen die Vorteile der vorliegenden Erfindung.

Beispiele

Herstellung der anorganischen Erhärtungsbeschleuniger über einen reaktiven Sprühprozess

Allgemeine Vorschrift 1 (ohne Zusatz von Polymer):

Es wurden eine wässerige Lösung von $CaCl_2$ und eine wässerige Lösung von $MgSO_4$ mit definierter Konzentration wie in Tabelle 1a oder 1 b beschrieben hergestellt. Diese Lösungen werden über einen Acrodisc Glasfaser Filter 1μm filtriert. Anschließend wurden diese Lösungen in eine Druckglasflasche (Fa. Schott) eingefüllt und ein Druck von 1,5 bar angelegt. Die Lösungen wurden über Bronkhorst mini Cori-Flow™ Durchflussregler mit 30 μm Stahl-Vorfilter exakt stöchiometrisch oder in unterschiedlicher Flussrate wie in Tabelle 1 beschrieben in einen Sprühturm B-290 der Fa. Büchi eingeleitet. Die Durchflussregler waren durch eine Master-Slave Schaltung verbunden und werden von einem Rechner digital angesteuert. Der Sprühturm war mit einer Dreistoffdüse Typ 0465555, einem Zyklonabscheider 004189 und einem Glasturm 044673 der Fa. Büchi ausgestattet. Der innere Kanal wurde mit der $MgSO_4$-Lösung und der äußere Kanal mit der $CaCl_2$-Lösung gespeist. Als Trocknungsgas wurde Stickstoff mit einem Durchfluss von $65m^3$ / h verwendet. Die Einlasstemperatur des Trocknungsgases wurde wie in Tabelle 1 beschrieben variiert, die entsprechende Auslasstemperatur des Trocknungsgases wurde ebenfalls gemessen und ist in Tabelle 1 gelistet. Die Sprühdüse wurde mit Brauchwasser gekühlt. Der Durchfluss des Zerstäubungsgases ($N_2$) betrug 819 Nl/h.

Allgemeine Vorschrift 2 (unter Zusatz von Polymer):

Es wurden eine wässerige $CaCl_2$ Lösung und eine wässerige $MgSO_4$ Lösung hergestellt, die zusätzlich eine in Tabelle 1a bzw. 1 b angegebene Menge des Polymers Melflux® 2650L (Fa. BASF Construction Solutions GmbH) in der Phase II ($MgSO_4$ Lösung) enthält.
Das Kammpolymer Melflux® 2650 L ist ein kommerziell erhältlicher Polycarboxylatether der BASF Construction Solutions GmbH. Das Polymer basiert auf den Monomeren Maleinsäure, Acrylsäure, Vinyloxybutyl-polyethylenglycol - 5800. $M_w$=36.000 g/mol, bestimmt per GPC; der Feststoffgehalt liegt bei 33 %.

Diese Lösungen werden über einen Acrodisc Glasfaser Filter 1μm filtriert. Anschließend wurden diese Lösungen in eine Druckglasflasche (Fa. Schott) eingefüllt und ein Druck von 1,5 bar angelegt. Die Lösungen wurden über Bronkhorst mini Cori-Flow™ Durchflussregler mit 30 μm Stahl-Vorfilter exakt stöchiometrisch oder in unterschiedlicher Flussrate wie in Tabelle 1a und Tabelle 1 b beschrieben in einen Sprühturm B-290 der Fa. Büchi eingeleitet. Die Durchflussregler waren durch eine Master-Slave Schaltung verbunden und werden von einem Rechner digital angesteuert. Der Sprühturm war mit einer Dreistoffdüse Typ 0465555, einem Zyklonabscheider 004189 und einem Glasturm 044673 der Fa. Büchi ausgestattet. Der innere Kanal wurde mit der $MgSO_4$- Lösung und der äußere Kanal mit der $CaCl_2$-Lösung gespeist. Als Trocknungsgas wurde Stickstoff mit einem Durchfluss von 65 $m^3$ / h verwendet. Die Einlasstemperatur des Trocknungsgases wurde wie in Tabelle 1 a bzw. 1 b beschrieben variiert, die entsprechende Auslasstemperatur des Trocknungsgases wurde ebenfalls gemessen und ist in Tabelle 1 gelistet. Die Sprühdüse wurde mit Brauchwasser gekühlt. Der Durchfluss des Zerstäubungsgases betrug 819 Nl/h.

Messung des Feststoffgehaltes:

Für die Bestimmung des Feststoffgehaltes (FSG) wurde ein HR73 Halogen Moisture Analyzer der Firma Mettler Toledo verwendet. Ca. 1 g Probe wurden auf Wägeschalen aus Aluminium:100mm Durchmesser x 7 mm Höhe eingewogen und in dem Gerät platziert.
Die Probe wurde bis zur Gewichtskonstanz (5s) bei 130°C getrocknet.

$$\text{Feststoffgehalt (Gew. \%)} = \text{Endgewicht (t=Messende)/Gewicht (t=0)} \cdot 100\ \%.$$

Tabelle 1a: Herstellung der Erhärtungsbeschleuniger (äquimolar)

| Bsp. Nr.: | Phase I | Phase II | Melflux® 2650 (Gew. % bezogen auf $CaSO_4$) | Trocknungsgas | Pumprate der Phase I und Phase II | Inlet-Temperatur | Outlet-Temperatur | Feststoffgehalt Gew. % |
|---|---|---|---|---|---|---|---|---|
| 1 | 0.4 M $CaCl_2$ | 0.4 M $MgSO_4$ + Melflux® 2650L | 3,8 % | Stickstoff | 5 mL/min | 210°C | 99-102°C | 84 |
| 2 | 2M $CaCl_2$ | 2M $MgSO_4$ | - | Stickstoff | 6 mL/min | 220°C | 90-93°C | 82 |
| 3 | 2M $CaCl_2$ | 2 M $MgSO_4$ Melflux® 2650L | 1,9 % | Stickstoff | 6 mL/min | 220°C | 95-98°C | 82 |

Tabelle 1b: Herstellung der Erhärtungsbeschleuniger mit unterschiedlichem molaren Verhältnis

| Bsp. Nr.: | Phase I | Dosierungsrate Phase I | Phase II | Melflux® 2650 (Gew. % bezogen auf $CaSO_4$) | Dosierungsrate Phase II | Trocknungsgas | Inlet-Temperatur | Outlet-Temperatur |
|---|---|---|---|---|---|---|---|---|
| 4 | 0.4M $CaCl_2$ | 5 mL/min | 0.4M $MgSO_4$ | 3,9 % | 2,5 mL/min | Stickstoff | 205 °C | 89-92°C |
| 5 | 0.4M $CaCl_2$ | 2,5 mL/min | 0.4M $MgSO_4$ | 3,9 % | 5 mL/min | Stickstoff | 195°C | 85-88°C |
| 6 | 0.4M $CaCl_2$ | 5 mL/min | 0.4M $MgSO_4$ | - | 5 mL/min | Stickstoff | 205 °C | 86-89°C |
| 7 | 0.4M $CaCl_2$ | 5 mL/min | 0.4M $MgSO_4$ | - | 2,5 mL/min | Stickstoff | 195°C | 82-86°C |
| 8 | 0.4M $CaCl_2$ | 2,5 mL/min | 0.4M $MgSO_4$ | - | 5 mL/min | Stickstoff | 195°C | 81-85°C |

Die physikalischen Eigenschaften der eingesetzten Erhärtungsbeschleunigerproben sind in der Tabelle 2 zusammengefasst.

Für die Bestimmung des Gehalts an Bassanit sowie der Kristallitgröße von Bassanit wurde der pulverförmige Erhärtungsbeschleuniger, insbesondere das darin enthaltene Bassanit, mittels Röntgenbeugung (XRD, Bruker D8 Discover) mit anschließender Rietveld-Analyse (The Rietveld Method, edited by R. A. Young, 2002, International Union of Crystallography monographs on crystallography: 5, ISBN 0-19-855912-7) analysiert. Die Messung wurde mit CuKα -Strahlung in einem Messbereich 2θ = 5-60 ° mit einer Schrittweite von 0,02 ° und einer Zählzeit pro Schritt von 0,4 Sekunden durchgeführt. Für die Rietveld-Auswertung wurde die Software Topas 4.2 mit Fundamentalparameteransatz der Firma Bruker verwendet.Die Bestimmung der Kristallitgröße der Phase Bassanit beruht dabei auf der Verfeinerung und Anpassung der Beugungsmusters der Struktur für Bassanit (ICSD Database # 79529). Ausgewertet wurde dabei die Lorentz-Kristallitgröße (Topas Parameter "Cry Size L" in nm), die sich anhand der angepassten Peakbreiten aus der Verfeinerung ergibt. Zu beachten ist dabei, dass die Kristallitgrößen nicht zwangsläufig mit den Partikelgrößen gleichzusetzen sind.

Tabelle 2: Kristallitgröße (aus XRD Messungen) und Bassanitgehalt

| Erhärtungsbeschleuniger Bsp. Nr.: | Kristallitgröße (nm) | Bassanitgehalt des Erhärtungsbeschleunigers (Gew. %) |
|---|---|---|
| 1 | 18.8 | 39.8 |
| 2 | 17.9 | 40.4 |
| 3 | 20.1 | 37.9 |
| 4 | 37.6 | 50.5 |
| 5 | 20.0 | 49.3 |
| 6 | 20.5 | 36.4 |
| 7 | 19.1 | 44.0 |
| 8 | 12.3 | 53.1 |

Zum Vergleich ist beispielsweise die Kristallitgröße eines repräsentativen auf Bassanit basierenden Bindemittels (Schwarze Pumpe der Firma Knauf) mit 72,8 nm wesentlich größer als die erfindungsgemäßen Erhärtungsbeschleuniger.

Üblicherweise bewegt sich die Kristallitgröße von Bindemitteln auf Bassanitbasis im Bereich von 50 nm bis ca. 200 nm und ist damit wesentlich größer.

Kalorimetrische Bestimmung der Erhärtungsbeschleunigungsleistung

Da das Bindemittel Bassanit eine zu hohe Reaktivität zeigt, um per Wärmeflusskalorimetrie untersucht zu werden, wird die Reaktion zunächst verzögert. Für die Messung werden 40 g Bindemittel Bassanit (Sigma-Aldrich > 97%) mit einer Mischung aus 15 g Wasser und 25 g einer 0,056 %igen Lösung eines Calciumsalzes einer N-Polyoxymethylen-Aminosäure (Verzögerer Retardan P der Sika AG) versetzt. Die resultierende Masse wird für 60 Sekunden mit einem Axialrührer bei 750 Umdrehungen pro Minute gerührt. In einer anschließenden Pause von 30 Sekunden wird der jeweilige Beschleuniger in einer Dosierung von 0,067 Gew. % im Beschleuniger enthaltenes Bassanit (Bassanitgehalte sind in Tabelle 2 offenbart) bezogen auf das Bindemittel Bassanit der Firma Sigma-Aldrich zugegeben und anschließend noch einmal für 30 Sekunden mit einem Axialrührer bei 750 Umdrehungen pro Minute gerührt. Der Wärmefluss wird mit einem TAM Air-Kalorimeter (TA Instruments) aufgezeichnet.

In der Abbildung Fig. 1 sind beispielhaft einige Wärmeflusskurven (Referenz und Erhärtungsbeschleunigerproben 1 und 5 gezeigt. Als Referenz (Blindwert) dient die nach dem vorstehend genannten Verfahren hergestellte Probe aus dem Bindemittel Bassanit und dem vorstehend genannten Verzögerer, ohne die Zugabe von Beschleuniger.

Die Leistung der Beschleuniger wird durch den Beschleunigungsfaktor $a_t$ charakterisiert und ist in der Tabelle 3 zusammengefasst.

Der Beschleunigungsfaktor $a_t$ berechnet sich aus der Verschiebung des Zeitpunkts t des maximalen Wärmeflusses. Im Beispiel 1 wird das Wärmeflussmaximum von 307 min ohne Beschleuniger (= $t_{Blind}$) auf 100 min (Beispiel 1 = $t_{Probe}$) verschoben, daraus berechnet sich der Beschleunigungsfaktor $a_t$ folgendermaßen:

$$a_t = \frac{t_{Blind} - t_{Probe}}{t_{Blind}}$$

Für das Beispiel 1 der Tabellen 2, 3 und (gezeigt in Fig. 1) ergibt sich also:

$$a_t = \frac{307min - 100min}{307min} = 0,67 = 67\%$$

Tabelle 3: Relative Beschleunigung der Erhärtungsbeschleuniger

| Bsp. Nr. | Relative Beschleunigung $a_t$ (%) |
|---|---|
| Referenz [1)] | 0 |
| Vergleich 1 [2)] | 51 |
| Vergleich 2 [2)] | 39 |
| 1 | 67 |
| 2 | 62 |
| 3 | 64 |
| 4 | 69 |
| 5 | 72 |
| 6 | 63 |
| 7 | 61 |
| 8 | 51 |

[1)] Bassanit der Firma Sigma-Aldrich, mit Verzögerer, ohne Beschleuniger
[2)] Das Vergleichsbeispiel 1 und das Vergleichsbeispiel 2 sind auf gemahlenem Calciumsulfatdihydrat basierende Standardbeschleuniger.

Die relativen Beschleunigungen der Tabelle 3 zeigen, dass in allen Fällen eine gute Beschleunigung des Erhärtens erzielt werden konnte. Gegenüber den pulverförmigen Standardbeschleunigern konnten meist deutlich bessere oder ähnlich gute Ergebnisse erzielt werden.

## Patentansprüche

**1.** Verfahren zur Herstellung von auf $CaSO_4$ basierten pulverförmigen Erhärtungsbeschleunigern durch reaktive Sprühtrocknung, wobei

a) eine wässrige, flüssige Calciumionen enthaltende Phase I und eine wässrige flüssige Sulfationen enthaltende Phase II, wobei das Molverhältnis der Calciumionen in der Phase I zu den Sulfationen in der Phase II von 1/5 bis 5/1 beträgt, an einer Sprühdüse in Kontakt gebracht wird,
b) die miteinander an der Sprühdüse in Kontakt gebrachten Phasen I und II in einer strömenden Umgebung aus Trocknungsgas mit einer Eingangstemperatur im Bereich von 120 bis 300 °C und einer Ausgangstemperatur im Bereich von 60 bis 120 °C versprüht werden,

wobei die Calciumionen mit den Sulfationen reagieren und unter Wasserentzug durch das Trägergas der pulverförmige Erhärtungsbeschleuniger erhalten wird.

**2.** Verfahren nach Anspruch 1, **dadurch gekennzeichnet, dass** die Sprühdüse eine Mehrkanaldüse ist.

3. Verfahren nach Anspruch 2, **dadurch gekennzeichnet, dass** die Mehrkanaldüse mindestens zwei Kanäle besitzt, in denen die wässrige, flüssige Calciumionen enthaltende Phase I und die wässrige, flüssige Sulfationen enthaltende Phase II separat in den zwei Kanälen zugeführt werden und die Phasen I und II am Austritt der Kanäle der Düse miteinander in Kontakt gebracht werden.

4. Verfahren nach einem der Ansprüche 1 bis 3, wobei als Phase I eine wässrige Lösung eines Calciumsalzes eingesetzt wird und als Phase II eine wässrige Lösung eines Sulfatsalzes oder einer Sulfationen bildenden Säure eingesetzt wird, **dadurch gekennzeichnet, dass** die Löslichkeit des Calciumsalzes in der wässrigen Phase I größer als 0,1 mol/l ist und die Löslichkeit des Sulfatsalzes oder der Sulfationen bildenden Säure in der wässrigen Phase II größer als 0,1 mol/l ist, wobei alle Löslichkeiten sich auf die Temperatur von 20 °C und Normaldruck beziehen.

5. Verfahren nach einem der Ansprüche 1 bis 4, **dadurch gekennzeichnet, dass** die Konzentration der Calciumionen in der Phase I von 0,1 mol/l bis 3,5 mol/l beträgt und die Konzentration der Sulfationen in der Phase II von 0,1 mol/l bis 3,5 mol/l beträgt.

6. Verfahren nach einem der Ansprüche 1 bis 3, **dadurch gekennzeichnet, dass** als Calciumsalz ein Salz aus der Reihe Calciumacetat, Calciumformiat, Calciumchlorid, Calciumbromid, Calciumiodid, Calciumhydroxid, Calciumsulfamidat, Calciumlactat, Calciummethansulfonat, Calciumpropionat, Calciumnitrat und/oder Calciumcarbonat eingesetzt wird.

7. Verfahren nach einem der Ansprüche 1 bis 6, **dadurch gekennzeichnet, dass** als Sulfatsalz Alkalisulfate, Ammoniumsulfat, Aluminiumsulfat und/oder Magnesiumsulfat oder als Sulfationen bildende Säure Schwefelsäure eingesetzt wird.

8. Verfahren nach einem der Ansprüche 1 bis 7, **dadurch gekennzeichnet, dass** beim Versprühen der Phasen I und II Tröpfchen mit einer mittleren Tropfengröße von 5 bis 2.000 μm erzeugt werden.

9. Verfahren nach einem der Ansprüche 1 bis 8, **dadurch gekennzeichnet, dass** eine der Phasen I oder II oder beide Phasen I und II ein säuregruppenhaltiges Polymer oder dessen Salz mit einem mittleren Molekulargewicht $M_w$ von 5.000 g/mol bis 100.000 g/mol enthält oder enthalten.

10. Verfahren nach Anspruch 9, **dadurch gekennzeichnet, dass** es sich bei der Säuregruppe des Polymers um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handelt.

11. Verfahren nach Anspruch 9 oder 10, **dadurch gekennzeichnet, dass** das säuregruppenhaltige Polymer Polyethergruppen enthält.

12. Verfahren nach Anspruch 11, **dadurch gekennzeichnet, dass** das säuregruppenhaltige Polymer Polyethergruppen der Struktureinheit (I) umfasst,

$$*\text{-U-(C(O))}_k\text{-X-(AlkO)}_n\text{-W} \qquad \text{(I)}$$

wobei

* die Bindungsstelle an das säuregruppenhaltige Polymer anzeigt,
U für eine chemische Bindung oder eine Alkylengruppe mit 1 bis 8 C-Atomen steht,
X Sauerstoff oder eine Gruppe $NR^1$ bedeutet,
k 0 oder 1 ist,
n für eine ganze Zahl steht, deren Mittelwert, bezogen auf das säuregruppenhaltige Polymer im Bereich von 3 bis 300 liegt,
Alk für Alkylen, bevorzugt $C_2$-$C_4$-Alkylen steht, wobei Alk innerhalb der Gruppe $(Alk\text{-}O)_n$ gleich oder verschieden sein kann,
W einen Wasserstoff-, einen Alkylrest, bevorzugt einen $C_1$-$C_6$-Alkylrest, oder einen Arylrest bedeutet oder W die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1 , 2 oder 3 zusätzliche Heteroatome, ausgewählt

unter Sauerstoff, Stickstoff und Schwefel aufweisen kann, wobei die Stickstoffringglieder eine Gruppe $R^2$ aufweisen können, und wobei 1 oder 2 Kohlenstoffringglieder als Carbonylgruppe vorliegen können,
$R^1$ für Wasserstoff, $C_1$-$C_4$-Alkyl oder Benzyl steht, und
$R^2$ für Wasserstoff, $C_1$-$C_4$-Alkyl oder Benzyl steht.

**13.** Verfahren nach einem der Ansprüche 9 bis 12, **dadurch gekennzeichnet, dass** das säuregruppenhaltige Polymer ein Polykondensationsprodukt darstellt, enthaltend

(II) eine einen Aromaten oder Heteroaromaten und eine Polyethergruppe der Struktureinheit (I) aufweisende Struktureinheit,
(III) eine phosphatierte einen Aromaten oder Heteroaromaten aufweisende Struktureinheit.

**14.** Verfahren nach Anspruch 13, **dadurch gekennzeichnet, dass** die Struktureinheiten (II) und (III) erhalten werden durch Einpolymerisation von Monomeren, welche durch folgende allgemeine Formeln repräsentiert werden

(IIa) $A-U-(C(O))_k-X-(AlkO)_n-W$

mit
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) vorstehend genannte Bedeutung besitzen;

(III)

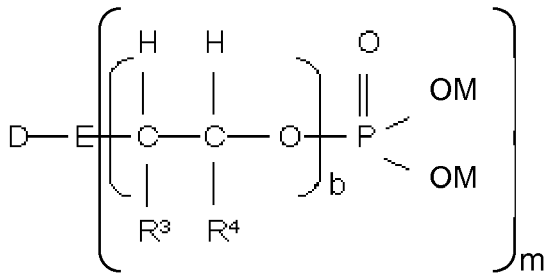

mit
D gleich oder verschieden sowie repräsentiert durch eine substituierte oder unsubstituierte aromatische oder heteroaromatische Verbindung mit 5 bis 10 C-Atomen im aromatischen System
mit
E gleich oder verschieden sowie repräsentiert durch N, NH oder O mit
m = 2 falls E = N und m = 1 falls E = NH oder O
mit
$R^3$ und $R^4$ unabhängig voneinander gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H
mit b
gleich oder verschieden sowie repräsentiert durch eine ganze Zahl von 0 bis 300 und.
mit M gleich H oder ein Kationäquivalent.

**15.** Verfahren nach Anspruch 13 oder 14, **dadurch gekennzeichnet, dass** das Polykondensationsprodukt eine weitere Struktureinheit (IV) enthält, welche durch folgende Formel repräsentiert wird

(IV)

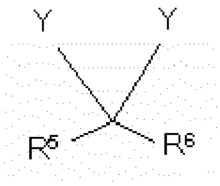

mit
Y unabhängig voneinander gleich oder verschieden und repräsentiert durch (II), (III) oder weitere Bestandteile des Polykondensationsproduktes,
$R^5$ und $R^6$ sind bevorzugt gleich oder verschieden und repräsentiert durch H, $CH_3$, COOH oder eine substituierte oder unsubstituierte aromatische oder heteroaromatische Verbindung mit 5 bis 10 C-Atomen.

**16.** Verfahren nach Anspruch 12, **dadurch gekennzeichnet, dass** das säuregruppenhaltige Polymer mindestens ein Copolymer darstellt, welches erhältlich ist durch Polymerisation einer Mischung von Monomeren, umfassend

(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(VI) mindestens ein ethylenisch ungesättigtes Monomer mit einer Polyethergruppe der Struktureinheit (I).

**17.** Verfahren nach Anspruch 16, **dadurch gekennzeichnet, dass** das ethylenisch ungesättigte Monomer (V) durch mindestens eine der folgenden allgemeinen Formeln aus der Gruppe (Va), (Vb) und (Vc) repräsentiert wird

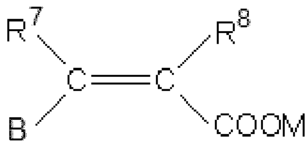
(Va)

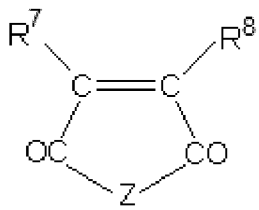
(Vb)

wobei

$R^7$ und $R^8$ unabhängig voneinander für Wasserstoff oder einen aliphatischen Kohlenwasserstoffrest mit 1 bis 20 C-Atomen
B für H, -COOM, -CO-O$(C_qH_{2q}O)_r$-$R^9$, -CO-NH-$(C_qH_{2q}O)_r$-$R^9$
M für H oder ein Kationäquivalent steht,
$R^9$ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen gegebenenfalls substituierten Arylrest mit 6 bis 14 C-Atomen
q unabhängig voneinander für jede $(C_qH_{2q}O)$-Einheit gleich oder verschieden 2, 3 oder 4 und
r für 0 bis 200
Z für O, $NR^3$

stehen,

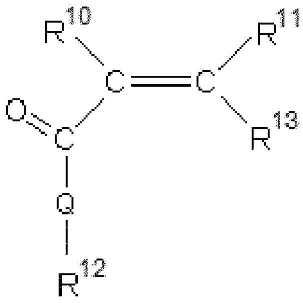

(Vc)

mit

$R^{10}$ und $R^{11}$ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
$R^{12}$ gleich oder verschieden sowie repräsentiert durch $(C_nH_{2n})$-$SO_3M$ mit n = 0, 1, 2, 3 oder 4, $(C_nH_{2n})$-OH mit n = 0, 1, 2, 3 oder 4; $(C_nH_{2n})$-$PO_3M_2$ mit n = 0, 1, 2, 3 oder 4, $(C_nH_{2n})$-$OPO_3M_2$ mit n= 0, 1, 2, 3 oder 4, $(C_6H_4)$-$SO_3M$, $(C_6H_4)$-$PO_3M_2$, $(C_6H_4)$-$OPO_3M_2$ und $(C_nH_{2n})$-$NR^{14}_b$ mit n = 0, 1, 2, 3 oder 4 und b = 2 oder 3
$R^{13}$ für H, -COOM, -CO-O$(C_qH_{2q}O)_r$-$R^9$, -CO-NH-$(C_qH_{2q}O)_r$-$R^9$, wobei M, $R^9$, q und r oben genannte Bedeutungen besitzen
$R^{14}$ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.
Q gleich oder verschieden sowie repräsentiert durch NH, $NR^{15}$ oder O; wobei $R^{15}$ für einen aliphatischen Kohlenwasserstoffrest mit 1 bis 10 C-Atomen, einen cycloaliphatischen Kohlenwasserstoffrest mit 5 bis 8 C-Atomen oder ein gegebenenfalls substituierter Arylrest mit 6 bis 14 C-Atomen steht.

**18.** Verfahren nach Anspruch 16 oder 17, **dadurch gekennzeichnet, dass** das ethylenisch ungesättigte Monomer (VI) durch folgende allgemeine Formeln repräsentiert wird

(VI)

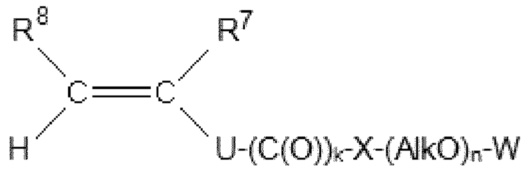

worin
alle Reste die vorstehend genannten Bedeutungen aufweisen.

**19.** Pulverförmiger Erhärtungsbeschleuniger herstellbar gemäß einem Verfahren nach einem der Ansprüche 1 bis 18.

**20.** Verwendung des pulverförmigen Erhärtungsbeschleunigers gemäß Anspruch 19 zur Beschleunigung des Erhärtens von Bassanit und/oder Anhydrit unter Entstehung von Gips.

**21.** Verwendung nach Anspruch 20 zur Herstellung einer Gipskartonplatte.

**22.** Verwendung nach Anspruch 20 in $\alpha$ Bassanit Spachtelmassen und Anhydrit basierten Fließestrichen.

Fig. 1: Wärmeflusskalorimetrie Diagramm der Referenz und zweier erfindungsgemäßer Proben

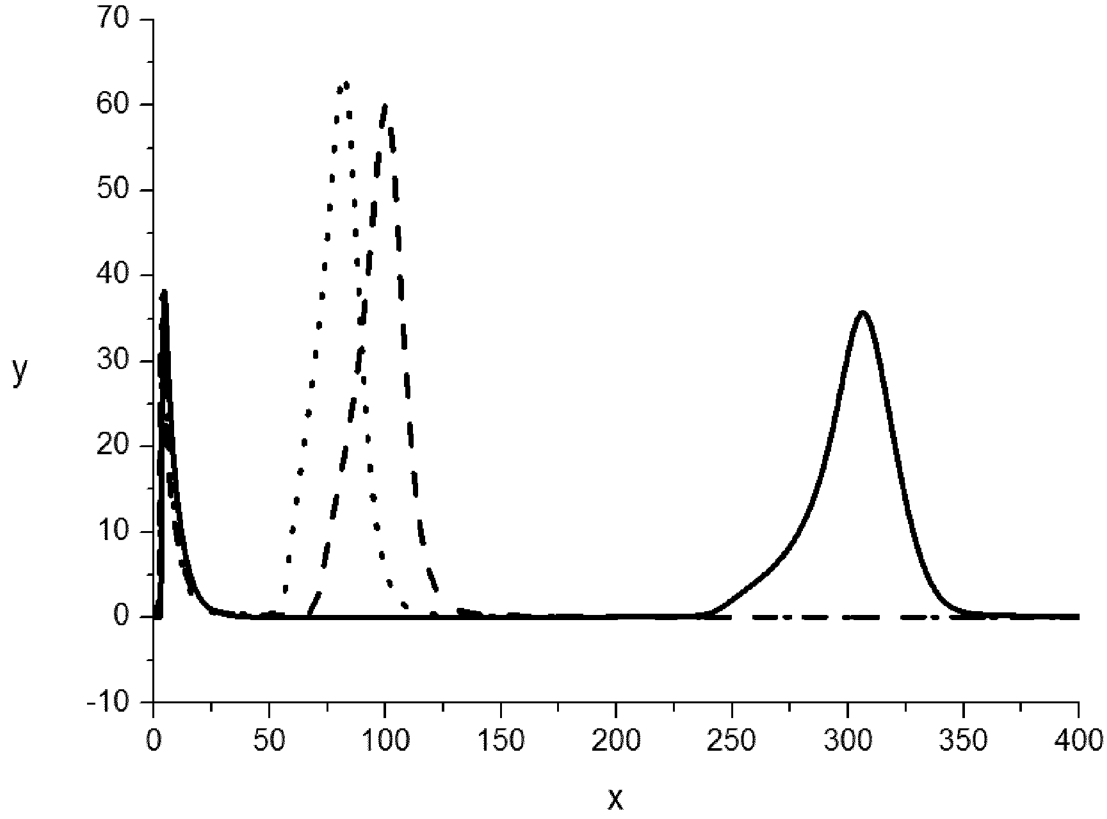


| | |
|---|---|
| x-Achse: | Zeit in Minuten |
| y-Achse: | Wärmefluss in mW/g |
| Durchgezogene Linie: | Referenz (nur Bindemittel Bassanit von Sigma-Aldrich mit Verzögerer, ohne Beschleuniger) |
| Gepunktete Linie: | Beispiel 1 (Bassanit von Sigma-Aldrich mit Verzögerer und Beschl. 1) |
| Gestrichelte Linie: | Beispiel 5 (Bassanit von Sigma-Aldrich mit Verzögerer und Beschl. 5) |

Europäisches Patentamt
European Patent Office
Office européen des brevets

# EUROPÄISCHER RECHERCHENBERICHT

Nummer der Anmeldung
EP 14 15 2184

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2 078 199 A (KING GEORGE D) 20. April 1937 (1937-04-20) * Seite 1, linke Spalte, Zeilen 1-36; Tabelle I * | 19-22 | INV. C01F11/46 C01F1/00 C04B28/14 C04B28/16 C04B22/14 C04B40/00 |
| A | WO 2010/026155 A1 (CONSTR RES & TECH GMBH [DE]; NICOLEAU LUC [DE]; JETZLSPERGER EVA [DE];) 11. März 2010 (2010-03-11) * Zusammenfassung * * Seite 35, Zeile 9 - Zeile 21 * | 1-22 | |
| A | WO 2008/151879 A1 (CONSTR RES & TECH GMBH [DE]; GAEBERLEIN PETER [DE]; SCHINABECK MICHAEL) 18. Dezember 2008 (2008-12-18) * das ganze Dokument * | 1-22 | |
| A | NEIL OSTERWALDER ET AL: "Preparation of nano-gypsum from anhydrite nanoparticles: Strongly increased Vickers hardness and formation of calcium sulfate nano-needles", JOURNAL OF NANOPARTICLE RESEARCH ; AN INTERDISCIPLINARY FORUM FOR NANOSCALE SCIENCE AND TECHNOLOGY, KLUWER ACADEMIC PUBLISHERS, DO, Bd. 9, Nr. 2, 23. September 2006 (2006-09-23), Seiten 275-281, XP019483088, ISSN: 1572-896X * "Introduction" * | 1-22 | RECHERCHIERTE SACHGEBIETE (IPC): C01F C04B |

Der vorliegende Recherchenbericht wurde für alle Patentansprüche erstellt

1

| Recherchenort | Abschlußdatum der Recherche | Prüfer |
|---|---|---|
| München | 20. Mai 2014 | Bonneau, Sébastien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 14 15 2184

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-05-2014

| Im Recherchenbericht angeführtes Patentdokument | Datum der Veröffentlichung | Mitglied(er) der Patentfamilie | Datum der Veröffentlichung |
|---|---|---|---|
| US 2078199 A | 20-04-1937 | KEINE | |
| WO 2010026155 A1 | 11-03-2010 | AU 2009289267 A1 | 11-03-2010 |
| | | CA 2735705 A1 | 11-03-2010 |
| | | CN 102216234 A | 12-10-2011 |
| | | DE 202009017741 U1 | 20-05-2010 |
| | | EP 2321235 A1 | 18-05-2011 |
| | | EP 2664595 A2 | 20-11-2013 |
| | | EP 2664596 A2 | 20-11-2013 |
| | | JP 2012501293 A | 19-01-2012 |
| | | RU 2011112305 A | 10-10-2012 |
| | | TW 201016629 A | 01-05-2010 |
| | | US 2011269875 A1 | 03-11-2011 |
| | | WO 2010026155 A1 | 11-03-2010 |
| WO 2008151879 A1 | 18-12-2008 | AU 2008264082 A1 | 18-12-2008 |
| | | CN 101679119 A | 24-03-2010 |
| | | DE 102007027477 A1 | 02-01-2009 |
| | | EP 2167444 A1 | 31-03-2010 |
| | | JP 2010529270 A | 26-08-2010 |
| | | WO 2008151879 A1 | 18-12-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4009062 A
- WO 2005021632 A
- WO 2006042709 A
- WO 2010040612 A


### In der Beschreibung aufgeführte Nicht-Patentliteratur


- **MÜLLER.** Die Abbindebeschleunigung von Stuckgips durch Calciumsulfatdihydrat. *Dissertation,* ISBN 978-3-899-58-328-1
- The Rietveld Method. International Union of Crystallography monographs on crystallography